(19) Europäisches Patentamt
European Patent Office
Office européen des brevets

(11) EP 2 751 430 B1

(12) **EUROPEAN PATENT SPECIFICATION**

(45) Date of publication and mention
of the grant of the patent:
**22.04.2020 Bulletin 2020/17**

(21) Application number: **12731838.4**

(22) Date of filing: **19.06.2012**

(51) Int Cl.:
*F04D 27/00* $^{(2006.01)}$     *F04D 27/02* $^{(2006.01)}$

(86) International application number:
**PCT/US2012/043047**

(87) International publication number:
**WO 2012/177582 (27.12.2012 Gazette 2012/52)**

(54) **CAPACITY CONTROL SYSTEM AND METHOD FOR CENTRIFUGAL COMPRESSOR**

KAPAZITÄTSREGELUNGSSYSTEM UND VERFAHREN FÜR KREISELVERDICHTER

SYSTÈME ET PROCÉDÉ DE RÉGULATION DE CAPACITÉ POUR COMPRESSEUR CENTRIFUGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.06.2011 US 201161500205 P**

(43) Date of publication of application:
**09.07.2014 Bulletin 2014/28**

(73) Proprietor: **Johnson Controls Technology
Company
Milwaukee, WI 53209 (US)**

(72) Inventors:
• **DE LARMINAT, Paul**
  **F-44000 Nantes (FR)**
• **ARNOU, Damien Jean Daniel**
  **F-49280 La Séguinière (FR)**

(74) Representative: **Trinks, Ole et al
Meissner Bolte Patentanwälte
Rechtsanwälte Partnerschaft mbB
Postfach 10 26 05
86016 Augsburg (DE)**

(56) References cited:
**GB-A- 1 593 361**

## Description

BACKGROUND

The application generally relates to a capacity control system and method for a centrifugal compressor. The application relates more specifically to systems and methods for managing the various control parameters of a centrifugal compressor to optimize compressor operating efficiency while avoiding surge conditions in the compressor.

A centrifugal compressor is designed for so-called design conditions, typically defined by the gas flow, temperature and pressure conditions at suction, and discharge pressure. Depending on the process, the compressor may operate continuously very close to the design conditions, or the conditions may deviate widely from design conditions during extended periods of time. Compressors used in HVAC systems are especially subject to such wide variations: the gas flow depends on the need for cooling load, while the pressure conditions, especially the condensing pressure, depend widely on the ambient temperature conditions. When operating at off-design conditions, a centrifugal compressor may encounter instabilities such as surge or stall during operation. Surge or surging is a transient phenomenon having oscillations in pressures and flow, and can result in complete flow reversal through the compressor. When surging, a compressor may be totally unable to deliver the desired flow at the desired pressure conditions.

Furthermore, surging, if uncontrolled, can cause excessive vibrations in both the rotating and stationary components of the compressor, and may result in compressor damage. Various devices and control parameters can be used to adjust the compressor operation to desired off-design flow and pressure conditions while avoiding compressor surging. The simplest way to reduce the flow of a centrifugal compressor is to reduce its speed. This requires the system to have adequate means to reduce the speed. Typical examples are turbine drives that can be operated at variable speed, or electric motors with electrical power supplied through a Variable Frequency Drive ("VFD"), also known as Variable Speed Drive (VSD). When technically available, speed reduction can be used only to a limited extent to avoid surge. When speed reduction is not or no longer possible, the next step is to use a Flow Reduction Device ("FRD"); the most commonly used is the Pre-Rotation Vanes ("PRV") system at compressor inlet, also called "Inlet Guide Vanes" to reduce the flow of the compressor. Some compressors also have an internal system to modify the diffuser geometry in order to reduce the compressor flow. This can be done with a system known as Variable Gap Diffuser ("VGD"). FRD can have an impact on the surge limit of the compressor. When the possibilities of reduced speed and of various FRD's have been exhausted, the last technique to correct a surge condition involves the opening of a hot gas bypass valve to return some of the discharge gas of the compressor to the compressor inlet to increase the flow at the compressor inlet. Depending on their availability on the machine, the settings of aforementioned devices, namely the VSD, PRV, VGD and hot gas by-pass are managed by a "stability control algorithm" intended to keep the machine in stable operation out of surge at the desired operating conditions, while optimizing its efficiency.

Active magnetic technology in the form of electromagnetic bearings is currently utilized in some turbomachinery drivelines, such as motors, compressors or turbines, to reduce friction while permitting free rotational movement by levitating rotors and shafts during operation. Electromagnetic bearings replace conventional technologies like rolling element bearings or fluid film bearings in the operation of such rotating apparatus, but require centering of the shaft within the electromagnetic bearings, the shaft comprising a ferromagnetic material. The positions of the shaft within the electromagnetic bearings are monitored by position sensors that provide electrical signals representing shaft locations to a bearing controller, which in turn adjusts the electrical current supplied to the electromagnetic bearings to maintain the shaft at a desired position or within a desired tolerance range.

When the compressor is operating normally, there is no mechanical contact between the rotating shaft and the stationary parts of the driveline. In the event of an unusual overload conditions such as surge in a turbo machine the load capacity of the bearings can be exceeded; the compressor shaft can no longer be supported by the electromagnetic bearings, resulting in a safety trip of the magnetic bearings.

The shaft must then be supported by mechanical components supplied for this purpose. Therefore, mechanical or safety bearings are provided as a back-up or safety to support the shaft when the machine is not operating or when the magnetic bearings are disabled for any reason, including safety trip.

In HVAC systems including a variable speed motor, the stability control algorithms are used in conjunction with the variable speed drive. Adaptive capacity control logic utilizing system operating parameters and compressor pre-rotational vanes (PRV) and (or) FRD position information can be used, e.g., to operate the compressor at a faster speed when a surge is detected while stability control algorithms are in a surge reacting state. Past performance parameters can be mapped and stored in memory to avoid future surge conditions by the adaptive capacity control logic. A description of an exemplary adaptive capacity control process is provided in U.S. Patent No. 4,608,833.

However, where magnetic bearings are utilized in the compressor, an adaptive control logic that relies on the compressor entering a surge condition is undesirable, to the extent that a surge condition poses an increased risk of a system shutdown that causes nuisance trips and may reduce the life time of the safety bearings.

E.g., GB 1 593 361 A relates to a conventional method of and system for controlling a compressor capacity,

while maintaining compressor stability according to the preambles of independent claims 1 and 10.

Intended advantages of the disclosed systems and/or methods satisfy one or more of these needs or provide other advantageous features. Other features and advantages will be made apparent from the present specification. The teachings disclosed extend to those embodiments that fall within the scope of the claims, regardless of whether they accomplish one or more of the aforementioned needs.

SUMMARY

The invention is defined by the appended claims.

Certain advantages of the embodiments described herein are controlling the PRV of a centrifugal compressor to avoid surge conditions in the compressor. Basically the same strategy applies if the FRD is of a different technology, for instance a VGD.

Alternative exemplary embodiments relate to other features and combinations of features as may be generally recited in the claims.

BRIEF DESCRIPTION OF THE FIGURES

FIG. 1 schematically shows an exemplary embodiment of a vapor compression system.

FIG. 1-A illustrates an exemplary set of curves plotting the head factor ($\Omega$) versus flow factor ($\theta$) of a compressor for various rotation speeds.

FIG. 2 shows a flow chart of an exemplary capacity control method for a compressor system.

FIG. 3 shows an exemplary map of $\Omega$ versus Mach$^2$.

DETAILED DESCRIPTION OF THE EXEMPLARY EMBODIMENTS

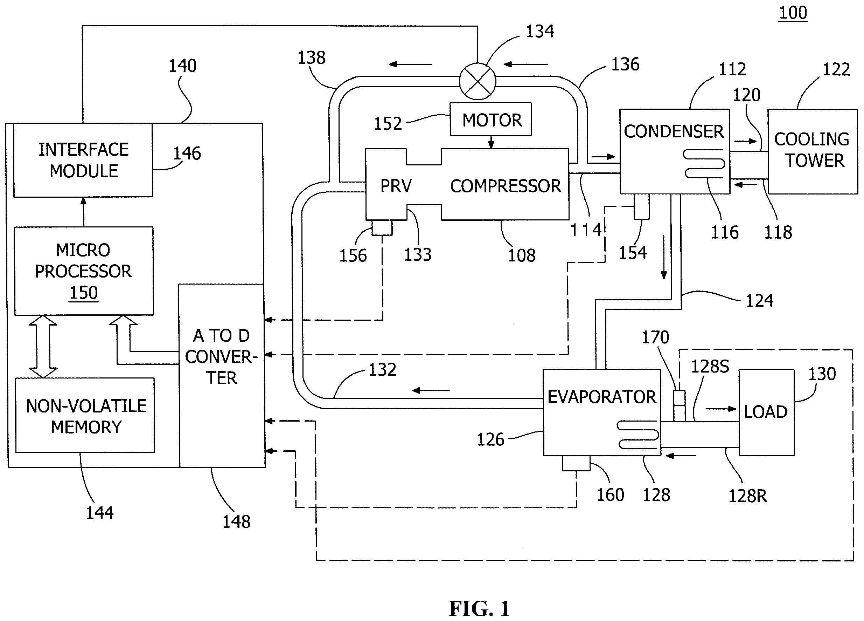

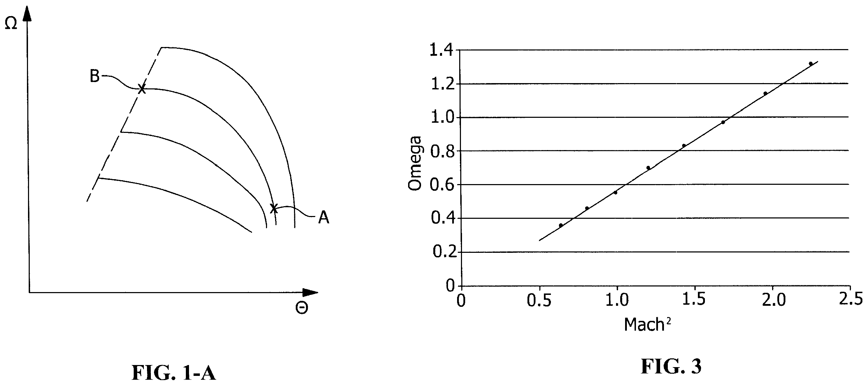

FIG. 1 schematically shows an exemplary vapor compression system 100 that may be used in heating, ventilation and air conditioning (HVAC), refrigeration or liquid chiller systems. Vapor compression system 100 includes a centrifugal compressor 108 that compresses the refrigerant vapor and delivers it to a condenser 112 via line 114. The condenser 112 includes a heat-exchanger coil 116 having an inlet 118 and an outlet 120 connected to a cooling tower 122. The condensed liquid refrigerant from condenser 112 flows via line 124 to an evaporator 126. The evaporator 126 includes a heat-exchanger coil 128 having a supply line 128S and a return line 128R connected to a cooling load 130. The vapor refrigerant in the evaporator 126 returns to compressor 108 via a suction line 132 containing pre-rotational vanes (PRV) 133. A hot gas bypass (HGBP) valve 134 is interconnected between lines 136 and 138 which are extended from the outlet of the compressor 108 to the inlet of PRV 133.

Vapor compression system 100 can circulate a fluid, e.g., a refrigerant, through a compressor 108 driven by a motor 152, a condenser 112, an expansion device (not shown), and an evaporator 126. System 100 can also include a control panel 140 that can have an analog to digital (A/D) converter 148, a microprocessor 150, a non-volatile memory 144, and an interface board 146. Some examples of fluids that may be used as refrigerants in vapor compression system 100 are hydro fluorocarbon (HFC) based refrigerants (e.g., R-410A), carbon dioxide (CO2; R-744), and any other suitable type of refrigerant.

A control panel 140 includes an interface module 146 for opening and closing the HGBP valve 134. Control panel 140 includes an analog to digital (A/D) converter 148, a microprocessor 150, a non-volatile memory 144, and an interface module 146.

Motor 152 used with compressor 108 is capable of variable speed. It can be a variable speed engine or turbine, or an electric motor powered by a variable speed drive (VSD) or can be powered directly from an alternating current (AC) or direct current (DC) power source. A variable speed drive, if used, receives AC power having a fixed line frequency and fixed line voltage (within a tolerance range) from the AC power source and provides power having a variable voltage and frequency to the motor. Motor 152 can be any type of electric motor that can be powered by a VSD or directly from an AC or DC power source. For example, motor 152 can be a switched reluctance motor, an induction motor, an electronically commutated permanent magnet motor, or any other suitable motor type. In an alternate embodiment, other drive mechanisms such as steam or gas turbines or engines and associated components can be used to drive compressor 108.

Compressor 108 compresses a refrigerant vapor and delivers the compressed vapor to condenser 112 through a discharge line. In an exemplary embodiment, compressor 108 can be a centrifugal compressor. The refrigerant vapor delivered by compressor 108 to condenser 112 transfers heat to a suitable fluid that can be, e.g., water or air. The refrigerant vapor condenses to a refrigerant liquid in condenser 112 as a result of the heat transfer with the fluid. The liquid refrigerant from condenser 112 flows through an expansion device (not shown) to an evaporator 126. The liquid refrigerant delivered to evaporator 126 absorbs heat from a suitable fluid that can be air or water and undergoes a phase change to a refrigerant vapor. The vapor refrigerant exits evaporator 126 and returns to compressor 108 by a suction line to complete the cycle.

In an exemplary embodiment shown in FIG. 1, the refrigerant vapor in condenser 112 enters into the heat exchange relationship with water, flowing through a heat-exchanger 116 connected to a cooling tower 122. The refrigerant vapor in condenser 112 undergoes a phase change to a refrigerant liquid as a result of the heat exchange relationship with the water in heat-exchanger coil. Evaporator 126 can include a heat-exchanger 128 having a supply line 128S and a return line 128R connected to a cooling load 130. Heat-exchanger 128 can include a plurality of tube bundles within evaporator 126. A secondary liquid, e.g., water, ethylene, calcium chloride brine, sodium chloride brine or any other suitable secondary liquid, travels into evaporator 126 via return line 128R and exits evaporator 126 via supply line 128S. The liquid refrigerant in evaporator 126 enters into a heat exchange relationship with the secondary liquid in heat-exchanger 128 to chill the temperature of the secondary liquid in heat-exchanger coil 128. The refrigerant liquid in evaporator 126 undergoes a phase change to a refrigerant vapor as a result of the heat exchange relationship with the secondary liquid in heat-exchanger coil 128.

At the input or inlet to compressor 108, there may be a set of pre-rotation vanes (PRV) 133 or inlet guide vanes that are used to control the flow of refrigerant to compressor 108. An actuator is used to open pre-rotation vanes 133 to increase the amount of refrigerant to compressor 108 and thereby increase the capacity of system 100. Similarly, the actuator is used to close pre-rotation vanes 133 o decrease the amount of refrigerant to compressor 108 and thereby decrease the cooling capacity of system 100. In an alternate embodiment, the flow reduction device can be a variable geometry diffuser at the outlet of the impeller.

When an operating point of a compressor, defined by a head factor ($\Omega$) and a flow factor ($\Theta$), is within the operation limits of a compressor, it is generally possible to obtain this operating point at various combinations of speed and PRV 133 position. The optimal operational efficiency is achieved by operating the compressor at the lowest speed that is possible without surging. Control panel 140 is programmed to determine a lowest speed possible and adjust the PRV 133 to the required capacity. Further, for any compressor speed, the compressor cannot exceed a maximum head factor $\Omega_{surge}$ without going into surge. Once the compressor geometry, and the compressed gas and operating conditions are defined, compressor speed can be converted into a Mach number. The Mach number is a parameter that is defined as the tip speed of the impeller divided by the speed of sound at a specific point in the system. The specific point may be located at the impeller inlet, although other points in the system may also be used.

In another embodiment, if a FRD is used, a multiplier of speed increase on a percentage opening of the FRD utilizing a FRD actuator feed-back signal can be used as discussed below.

In another embodiment, the actual compressor head can be the actual isentropic head.

Compressor head can be estimated from refrigerant properties measured in vessels upstream and downstream the compressor as discussed in greater detail below.

FIG. 1-A represents a typical set of curves giving the head factor ($\Omega$) versus flow factor ($\Theta$) of a compressor for various rotation speeds (or Mach numbers). Each of these curves is called the "speed line" of the compressor at the given Mach number. At a given speed or Mach number and with fully open FRD, starting from a point A at the right of the curve high flow and low head, when the head is increased, the flow reduces until the surge point B is reached. The maximum head factor $\Omega$surge at a given Mach number is achieved with fully open PRV 133 (or other FRD), at the operating point where the speed line intersects the "surge line".

For a given compressor, $\Omega_{surge}$ can be plotted versus Mach$^2$. In theory, both are proportional. This theory is usually very well validated in practice, as seen on FIG. 3, representing an exemplary plot for a real industrial compressor.

The proportionality coefficient is defined as MachRatio$^2$ = Mach$^2$ / $\Omega$. For a series of compressors extrapolated from the same design by applying a scale factor, the MachRatio is nearly the same irrespective of the compressor size. Therefore, for a given head factor $\Omega$, a corresponding minimum mach number may be calculated, to avoid a surge condition in compressor 108 when compressor is operating with PRV 133 fully open. In another embodiment, for a given head factor $\Omega$, a corresponding minimum RPM or minimum motor rotation frequency may be used instead of the Mach number.

Based on the proportionality coefficient defined above, Mach$_{Surge}$ = MachRatio $*$ $\Omega^{0.5}$ Note that Mach number is defined as the ratio of the impeller tip speed divided by speed of sound calculated at compressor suction. It is proportional to RPM, and to the impeller outside diameter. Also, MachRatio is the minimum Mach number that the compressor can operate while stable - i.e., without entering a surge condition - with PRV 133 open at $\Omega$ =1.

The value of the variable MachRatio may be adjusted to include a margin with respect to surge. Selecting a higher MachRatio value will increase the safety margin with respect to surge. But a higher MachRatio value will also result in lower compressor efficiency at part load, i.e., a higher motor speed with PRV 133 closed.

When operating compressor 108 with PRV 133 partially closed and operating at constant compressor speed, the head pressure that compressor 108 can deliver is reduced the more PRV 133 is closed. E.g., in one exemplary embodiment, wherein M=1.25, the head reduction versus PRV opening is represented in the following table:

| %PRV | $\Omega_{surge}$(%PRV) | HeadReduction (%PRV) | Speed Increase (%PRV) |
|---|---|---|---|
| 100 | 0.92 | 1.000 | 1.000 |
| 80 | 0.90 | 0.978 | 1.011 |
| 60 | 0.89 | 0.967 | 1.017 |
| 40 | 0.86 | 0.935 | 1.034 |
| 20 | 0.82 | 0.891 | 1.059 |
| 10 | 0.77 | 0.837 | 1.093 |
| 3 | 0.65 | 0.707 | 1.190 |
| 0 | 0.55 | 0.598 | 1.293 |

$\Omega_{surge}$ (%PRV) indicates the maximum head factor before surge for the associated %PRV; and HeadReduction(%PRV) is defined as a ratio of: $\Omega_{surge}$(%PRV)/ $\Omega_{surge}$(100%PRV).

The coefficient of HeadReduction(%PRV) can be considered as independent of compressor speed for easiest implementation. In order to avoid compressor surge at constant head pressure, compressor speed needs to increase as PRV 133 closes. For partially closed PRV then,

$$\text{MachSurge = MachRatio * SpeedIncrease(\%PRV) * } \Omega \ 0.5 \qquad \textbf{EQ. 1}$$

wherein the required compressor speed increase (SpeedIncrease (%PRV)) is defined by Equation 2 below:

$$\text{SpeedIncrease (\%PRV) = 1 / [ HeadReduction(\%PRV) ]0.5} \qquad \textbf{EQ. 2}$$

and the MachRatio parameter is MachRatio = MachRatio100%PRV. For the sake of simplicity, the coefficient of HeadReduction is taken as a function of PRV opening only. For a finer adjustment of the speed to further improve the efficiency at part load, other secondary parameters may also be taken into account. For instance, the coefficient of HeadReduction can be taken as a function of PRV opening and Mach number. In addition, the principle remains the same if the Capacity Reduction Device is not a PRV but a different system like a VGD. In this case, the coefficient of head reduction will be defined as a function of VGD opening, and possibly also of the Mach number.

The compression head factor $\Omega$ evaluation requires a determination of the speed of sound at the compressor suction inlet, and the isentropic compression enthalpy ΔHi. In one embodiment, various parameters, e.g., pressure and temperature, at compressor suction, and the compressor discharge pressure are measured, and applied to the refrigerant properties. In an alternate embodiment, simple polynomial correlations are elaborated from NIST-REFPROP database, available from the National Institute of Standards and Technology. The REFPROP database is actually a computer program and does not contain any experimental information, aside from the critical and triple points of the pure fluids. The program uses equations for the thermodynamic and transport properties to calculate the state points of the refrigerant fluid or mixture. The exemplary compressor head calculations and correlations for R134a refrigerant are as follows:

**Compressor head calculation for R134a:**

$$\Omega = (0.0329* \ \Delta T_{sat} - 0.0001* \ \Delta T_{sat}{}^2) / [1+( \ T_{Sat\_suct}-5)*0.0065] \qquad \textbf{EQ. 3}$$

with

$$\Delta T_{sat} = T_{Sat\_disc} - T_{Sat\_suct}$$

This correlation is applicable for:

- $T_{Sat\_suct}$ from 0°C to 30°C (where $T_{Sat\_disc}$ is the refrigerant saturation temperature at the discharge of the compressor and $T_{Sat\_suct}$ is the refrigerant saturation temperature at the suction end of the compressor)
- $\Delta T_{sat}$ from 0°C to 50°C

It is valid with +/-0.5% accuracy

**Sound speed at suction calculation for R134a**

$$\text{Speed of Sound} = 147.6 + (T_{sat\_suction} - 5°C)*(145.31\text{-}147.59)/(25\text{-}5)$$
$$= 147.6 - 0.114 * (T_{sat\_suction} - 5°C) \qquad \textbf{EQ. 4}$$

Reference points for this linear correlation are: 147.59m/s at 5°C and 145.31m/s at 25°C

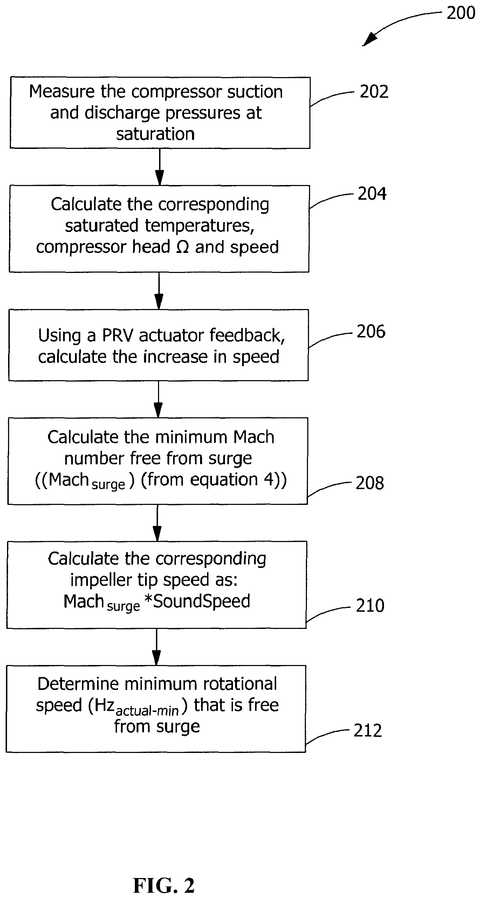

Referring next to FIG. 2, a novel method of computing and controlling the compressor rotational speed is shown. The method 200 begins at step 202, by measuring the suction and discharge pressures of the compressor at saturation. Next, the method proceeds to step 204, and calculates the saturated temperatures corresponding with the suction and discharge pressures of the compressor at saturation. From the saturated temperatures the compressor head $\Omega$ and speed of sound is also calculated using adequate correlations. Next, the method proceeds to step 206, in which the multiplier of speed increase is calculated based on the percentage of the PRV, utilizing the PRV actuator feed-back. The method then proceeds to step 208, to calculate the minimum Mach number at which the compressor may operate while stable and out of surge from equation (4) as follows:

$$\text{MachSurge} = \text{MachRatio} * \text{SpeedIncrease}(\%\text{PRV}) * \Omega\,0.5 \qquad \textbf{EQ. 1}$$

Next, at step 210, the method calculates an impeller tip speed corresponding to the variable MachSurge:

$$\text{Tip Speed} = \text{MachSurge} * \text{Sound Speed} \qquad \textbf{EQ. 5}$$

The method proceeds to step 212, and calculates minimum rotational speed ($Hz_{actual\text{-}min}$) at which the compressor may operate while stable and out of surge as:

$$Hz_{actual\_min} = \text{Tip Speed} / (\text{ImpellerOD} * \pi) \qquad \textbf{EQ. 6}$$

It should be understood that the application is not limited to the details or methodology set forth in the following description or illustrated in the figures. It should also be understood that the phraseology and terminology employed herein is for the purpose of description only and should not be regarded as limiting.

While the exemplary embodiments illustrated in the figures and described herein are presently preferred, it should be understood that these embodiments are offered by way of example only. Accordingly, the present application is not limited to a particular embodiment, but extends to various modifications that nevertheless fall within the scope of the appended claims. The order or sequence of any processes or method steps may be varied or re-sequenced according to alternative embodiments.

The present application contemplates methods, systems and program products on any machine-readable media for accomplishing its operations. The embodiments of the present application may be implemented using an existing computer processors, or by a special purpose computer processor for an appropriate system, incorporated for this or another purpose or by a hardwired system.

It is important to note that the construction and arrangement of the capacity control system and method, as shown in the various exemplary embodiments, is illustrative only. Although only a few embodiments have been described in detail in this disclosure, those who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited in the claims. For example, elements shown as integrally formed may be constructed of multiple parts or elements, the position of elements may be reversed or otherwise varied, and the nature or number of discrete elements or positions may be altered or varied. Accordingly, all such modifications are intended to be included within the scope of the present application. The order or sequence of any process or method steps may be varied or re-sequenced according to alternative embodiments. In the claims, any means-plus-function clause is intended to cover the structures described herein as performing the recited function and not only structural equivalents but also equivalent structures. Other substitutions, modifications, changes and omissions may be made in the design, operating conditions and arrangement of the exemplary embodiments without departing from the scope of the present application.

As noted above, embodiments within the scope of the present application include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions comprise, for example, instructions and data which cause a general purpose computer, special purpose computer, or special purpose processing machines to perform a certain function or group of functions.

It should be noted that although the figures herein may show a specific order of method steps, it is understood that the order of these steps may differ from what is depicted. Also two or more steps may be performed concurrently or with partial concurrence. Such variation will depend on the software and hardware systems chosen and on designer choice. It is understood that all such variations are within the scope of the application. Likewise, software implementations could be accomplished with standard programming techniques with rule based logic and other logic to accomplish the various connection steps, processing steps, comparison steps and decision steps.

A method of computing and controlling a compressor capacity measuring refrigerant properties at suction and at discharge of the compressor; calculating the actual compressor head in a respective refrigerant; and calculating a minimum rotational speed ($Hz_{actual-min}$) at which the compressor may operate while stable and out of surge using a constant coefficient multiplied by actual head.

## Claims

1. A method of controlling a compressor capacity while maintaining compressor stability, comprising:

   - providing a compressor (108) and a flow reduction device for controlling flow of refrigerant through the compressor (108);
   - measuring a suction pressure and a discharge pressure of the compressor (108);
   - calculating a compressor head factor ($\Omega$) based amongst others on the suction pressure and the discharge pressure;

   **characterized by**:

   - calculating a speed of sound $n_{sound}$ in the refrigerant;
   - calculating a minimum Mach number;
   - calculating the tip speed of the impeller at the minimum Mach number;
   - calculating a multiplier of speed increase as a function of the flow reduction device based on an actuator feedback signal;
   - determining a minimum rotational speed at which the compressor (108) may operate free from a surge condition based amongst others on the minimum Mach number and the multiplier of speed increase; and
   - controlling a rotational speed of the compressor (108) above the minimum rotational speed.

2. The method of claim 1,
   wherein the step of calculating the compressor head factor ($\Omega$) further comprises calculating a first saturated temperature corresponding with the suction pressure and a second saturated temperature corresponding with the discharge pressure; and calculating a compressor head factor ($\Omega$) based on the first saturated temperature and the second saturated temperature.

3. The method of claim 1, wherein:

   - the step of calculating the speed of sound further comprises applying predetermined correlations to determine the speed of sound; or
   - the step of calculating the minimum Mach number comprises calculating the minimum Mach number at which the compressor can operate while stable and free from surge conditions, at a predetermined point in the compressor (108).

4. The method of claim 1, wherein:

   - the minimum Mach number is determined without operating the flow reduction device; or
   - the minimum Mach number at which the compressor can operate while stable and free from surge conditions is determined while a pre-rotation vane (PRV) in a refrigerant flow path is fully open; or
   - further comprising adjusting the minimum Mach number to include a safety margin relative to a surge condition.

5. The method of claim 1,
   further comprising increasing the compressor speed as the flow reduction device closes.

6. The method of claim 5,
   wherein increasing the compressor speed for partially closed flow reduction device is inversely proportional to a reduced head pressure at the partially closed flow reduction device.

7. The method of claim 6,
   wherein the increase in the compressor speed is related to the reduction in head pressure according to an algorithm, the algorithm comprising:

   - SpeedIncrease at %PRV = 1 / [HeadReduction at (%PRV)] 0.5

   wherein: SpeedIncrease is the increase in compressor speed;
   HeadReduction is the reduction in compressor head pressure; and %PRV is a percentage of the full opening of a pre-rotation vane.

8. The method of claim 7,
   wherein the speed increase further improves the efficiency at part load, and secondary parameters can also be taken into account wherein the coefficient of Head Reduction is a function of a pre-rotation vane opening and the minimum Mach number.

9. The method of claim 1,
   wherein the flow reduction device is a variable gap diffuser, and wherein the coefficient of head reduction will be defined as a function of at least one of the percentage of a variable gap diffuser opening and the minimum Mach number.

10. A system for controlling a compressor comprising:

    - a compressor (108) having an impeller, a condenser (112), and an evaporator (126) connected in a closed refrigerant loop;
    - a controller (140) configured to control a capacity of the compressor (108), the controller (140) configured to:

      - calculate a compressor head factor ($\Omega$) based on the suction pressure and the discharge pressure;

    **characterized by**:

      - calculate a speed of sound $n_{sound}$ in a refrigerant;
      - calculate a minimum Mach number;

8

- calculate the tip speed of the impeller at the minimum Mach number;
- calculate a multiplier of speed increase as a function of the flow reduction device based on an actuator feed-back signal; and
- determine a minimum rotational speed at which the compressor (108) may operate free from a surge condition based amongst others on the minimum Mach number and the multiplier of speed increase; and
- control a rotational speed of the compressor (108) above the minimum rotational speed.

**Patentansprüche**

1. Verfahren zum Regeln einer Verdichterkapazität unter Beibehaltung der Verdichterstabilität, umfassend:

    - Bereitstellen eines Verdichters (108) und einer Flussreduzierungsvorrichtung zum Regeln des Kältemittelflusses durch den Verdichter (108);
    - Messen eines Saugdrucks und eines Förderdrucks des Verdichters (108);
    - Berechnen eines Verdichterkopffaktors ($\Omega$) basierend unter anderem auf dem Saugdruck und dem Förderdruck;

    **gekennzeichnet durch**:

    - Berechnen einer Schallgeschwindigkeit $n_{Schall}$ im Kältemittel;
    - Berechnen einer minimalen Machzahl;
    - Berechnen der Spitzengeschwindigkeit des Laufrads bei der minimalen Machzahl;
    - Berechnen eines Multiplikators der Drehzahlerhöhung in Abhängigkeit von der Flussreduzierungsvorrichtung basierend auf einem Aktuatorrückkopplungssignal;
    - Bestimmen einer Mindestdrehzahl, bei der der Verdichter (108) frei von einem Pumpzustand arbeiten kann, basierend unter anderem auf der minimalen Machzahl und dem Multiplikator der Drehzahlerhöhung; und
    - Regeln einer Drehzahl des Verdichters (108) oberhalb der Mindestdrehzahl.

2. Verfahren nach Anspruch 1,
    wobei der Schritt des Berechnens des Verdichterkopffaktors ($\Omega$) ferner das Berechnen einer ersten, dem Ansaugdruck entsprechenden Sättigungstemperatur und einer zweiten, dem Förderdruck entsprechenden Sättigungstemperatur; und das Berechnen eines Verdichterkopffaktors ($\Omega$) basierend auf der ersten Sättigungstemperatur und der zweiten Sättigungstemperatur umfasst.

3. Verfahren nach Anspruch 1, wobei:

    - der Schritt des Berechnens der Schallgeschwindigkeit ferner das Anwenden vorbestimmter Korrelationen zum Bestimmen der Schallgeschwindigkeit umfasst; oder
    - der Schritt des Berechnens der minimalen Machzahl das Berechnen der minimalen Machzahl umfasst, bei der der Verdichter an einem vorbestimmten Punkt im Verdichter (108) stabil und frei von Pumpzuständen arbeiten kann.

4. Verfahren nach Anspruch 1, wobei:

    - die minimale Machzahl ohne Betreiben der Flussreduzierungsvorrichtung bestimmt wird; oder
    - die minimale Machzahl, bei der der Verdichter stabil und frei von Pumpzuständen arbeiten kann, bestimmt wird, während eine Vordrallschaufel (VDS) in einem Kältemittelflussweg vollständig geöffnet ist; oder
    - ferner umfassend ein Einstellen der minimalen Machzahl durch Einbeziehen einer Sicherheitsspanne relativ zu einem Pumpzustand.

5. Verfahren nach Anspruch 1,
    ferner umfassend ein Erhöhen der Verdichterdrehzahl beim Schließen der Flussreduzierungsvorrichtung.

6. Verfahren nach Anspruch 5,
    wobei das Erhöhen der Verdichterdrehzahl für eine teilweise geschlossene Flussreduzierungsvorrichtung umgekehrt proportional zu einem reduzierten Kopfdruck an der teilweise geschlossenen Flussreduzierungsvorrichtung ist.

**7.** Verfahren nach Anspruch 6,
wobei die Erhöhung der Verdichterdrehzahl mit der Verringerung des Kopfdrucks gemäß einem Algorithmus in Beziehung steht, wobei der Algorithmus umfasst:

- Drehzahlerhöhung bei %VDS = 1 / [Kopfreduzierung bei (%VDS)] 0,5

wobei: Drehzahlerhöhung die Erhöhung der Verdichterdrehzahl ist;
Kopfreduzierung die Reduzierung des Verdichterkopfdrucks und %VDS ein Prozentsatz der vollständigen Öffnung einer Vordrallschaufel ist.

**8.** Verfahren nach Anspruch 7,
wobei die Drehzahlerhöhung den Wirkungsgrad bei Teillast weiter verbessert und auch sekundäre Parameter berücksichtigt werden können, wobei der Koeffizient der Kopfreduzierung eine Funktion einer Vordrallschaufelöffnung und der minimalen Machzahl ist.

**9.** Verfahren nach Anspruch 1,
wobei die Flussreduzierungsvorrichtung ein Diffusor mit variablem Spalt ist, und wobei der Koeffizient der Kopfreduzierung als eine Funktion mindestens eines aus dem Prozentsatz der Öffnung eines Diffusors mit variablem Spalt und der minimalen Machzahl definiert wird.

**10.** System zum Steuern eines Verdichters, umfassend:

- einen Verdichter (108) mit einem Laufrad, einem Verflüssiger (112) und einem Verdampfer (126), die in einem geschlossenen Kältemittelkreislauf verbunden sind;
- einen Regler (140), der dazu eingerichtet ist, eine Kapazität des Verdichters (108) zu regeln, wobei der Regler (140) dazu eingerichtet ist:
- einen Verdichterkopffaktor ($\Omega$) basierend auf dem Saugdruck und dem Förderdruck zu regeln;

**gekennzeichnet durch**:

- Berechnen einer Schallgeschwindigkeit $n_{Schall}$ in einem Kältemittel;
- Berechnen einer minimalen Machzahl;
- Berechnen der Spitzengeschwindigkeit des Laufrads bei der minimalen Machzahl;
- Berechnen eines Multiplikators der Drehzahlerhöhung in Abhängigkeit von der Flussreduzierungsvorrichtung basierend auf einem Aktuatorrückkopplungssignal; und
- Bestimmen einer Mindestdrehzahl, bei der der Verdichter (108) frei von einem Pumpzustand arbeiten kann, basierend unter anderem auf der minimalen Machzahl und dem Multiplikator der Drehzahlerhöhung; und
- Regeln einer Drehzahl des Verdichters (108) oberhalb der Mindestdrehzahl.

**Revendications**

**1.** Procédé de régulation de la capacité d'un compresseur tout en maintenant la stabilité du compresseur, comprenant :

- la mise en place d'un compresseur (108) et d'un dispositif de réduction de débit pour réguler le débit d'agent frigorigène à travers le compresseur (108) ;
- la mesure d'une pression d'aspiration et d'une pression de refoulement du compresseur (108) ;
- le calcul d'un facteur de charge de compresseur ($\Omega$) sur la base entre autres de la pression d'aspiration et de la pression de refoulement ;

**caractérisé par** :

- le calcul d'une vitesse du son ($n_{son}$) dans l'agent frigorigène ;
- le calcul d'un nombre de Mach minimal ;
- le calcul de la vitesse périphérique de l'impulseur au nombre de Mach minimal ;
- le calcul d'un multiplicateur d'accroissement de vitesse en fonction du dispositif de réduction de débit sur la base d'un signal de rétroaction d'actionneur ;
- la détermination d'une vitesse de rotation minimale à laquelle le compresseur (108) peut fonctionner exempt de condition de pompage, notamment sur la base du nombre de Mach minimal et du multiplicateur d'accroissement de vitesse ; et

- la régulation d'une vitesse de rotation du compresseur (108) supérieure à la vitesse de rotation minimale.

2. Procédé selon la revendication 1,
l'étape de calcul du facteur de charge de compresseur (Ω) comprenant en outre le calcul d'une première température saturée correspondant à la pression d'aspiration et d'une seconde température saturée correspondant à la pression de refoulement ; et le calcul d'un facteur de charge de compresseur (Ω) sur la base de la première température saturée et de la seconde température saturée.

3. Procédé selon la revendication 1,

- l'étape de calcul de la vitesse du son comprenant en outre l'application de corrélations prédéterminées pour déterminer la vitesse du son ; ou
- l'étape de calcul du nombre de Mach minimal comprenant le calcul du nombre de Mach minimal au niveau duquel le compresseur peut fonctionner tout en étant stable et exempt des conditions de pompage, en un point prédéterminé du compresseur (108).

4. Procédé selon la revendication 1,

- le nombre de Mach minimal étant déterminé sans faire fonctionner le dispositif de réduction de débit ; ou
- le nombre de Mach minimal au niveau duquel le compresseur peut fonctionner dans des conditions stables et exempt des conditions de pompage étant déterminé alors qu'une aube de pré-rotation (PRV) dans un circuit d'agent frigorigène est complètement ouverte ; ou
- comprenant en outre l'ajustement du nombre de Mach minimal pour inclure une marge de sécurité par rapport à une condition de pompage.

5. Procédé selon la revendication 1,
comprenant en outre l'accroissement de la vitesse du compresseur lorsque le dispositif de réduction de débit se ferme.

6. Procédé selon la revendication 5,
l'accroissement de la vitesse du compresseur pour un dispositif de réduction de débit partiellement fermé étant inversement proportionnelle à une pression de charge réduite au niveau du dispositif de réduction de débit partiellement fermé.

7. Procédé selon la revendication 6,
l'accroissement de la vitesse du compresseur étant liée à la réduction de pression de charge selon un algorithme, l'algorithme comprenant :

- Accroissement de vitesse à %PRV = 1 / [Réduction de charge à (%PRV)] 0,5

Accroissement de vitesse étant l'accroissement de vitesse du compresseur ; Réduction de charge étant la réduction de pression de charge de compresseur ; et %PRV étant un pourcentage de l'ouverture totale d'une aube de pré-rotation.

8. Procédé selon la revendication 7,
l'accroissement de vitesse améliorant en outre le rendement à charge partielle, et des paramètres secondaires pouvant également être pris en compte, le coefficient de réduction de charge étant fonction de l'ouverture d'une aube de pré-rotation et du nombre de Mach minimal.

9. Procédé selon la revendication 1,
le dispositif de réduction de débit étant un diffuseur à fente variable, et le coefficient de réduction de charge sera défini en fonction d'au moins un des pourcentages d'ouverture d'un diffuseur à fente variable et du nombre de Mach minimal.

10. Système de régulation d'un compresseur comprenant :

- un compresseur (108) ayant un impulseur, un condenseur (112), et un évaporateur (126) connectés dans une boucle fermée de l'agent frigorigène ;

- un dispositif de régulation (140) configuré pour réguler une capacité du compresseur (108), le dispositif de régulation (140) étant configuré pour :

- calculer un facteur de charge de compresseur ($\Omega$) sur la base de la pression d'aspiration et de la pression de refoulement ;

**caractérisé par** :

- le calcul d'une vitesse du son ($n_{son}$) dans un agent frigorigène ;

- le calcul d'un nombre de Mach minimal ;

- le calcul de la vitesse périphérique de l'impulseur au nombre de Mach minimal ;

- le calcul d'un multiplicateur d'accroissement de vitesse en fonction du dispositif de réduction de débit sur la base d'un signal de rétroaction d'actionneur ; et

- la détermination d'une vitesse de rotation minimale à laquelle le compresseur (108) peut fonctionner exempt d'une condition de pompage, notamment sur la base du nombre de Mach minimal et du multiplicateur d'accroissement de vitesse ; et

- la régulation d'une vitesse de rotation du compresseur (108) supérieure à la vitesse de rotation minimale.

**FIG. 1**

**FIG. 1-A**

**FIG. 3**

EP 2 751 430 B1

200

| Measure the compressor suction and discharge pressures at saturation | 202 |

| Calculate the corresponding saturated temperatures, compressor head $\Omega$ and speed | 204 |

| Using a PRV actuator feedback, calculate the increase in speed | 206 |

| Calculate the minimum Mach number free from surge (($Mach_{surge}$) (from equation 4)) | 208 |

| Calculate the corresponding impeller tip speed as: $Mach_{surge}$ *SoundSpeed | 210 |

| Determine minimum rotational speed ($Hz_{actual-min}$) that is free from surge | 212 |

**FIG. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4608833 A
- GB 1593361 A